# EUROPÄISCHE PATENTSCHRIFT

(11) **EP 2 758 268 B1**
(45) Veröffentlichungstag und Bekanntmachung des Hinweises auf die Patenterteilung: **01.07.2015**
(21) Anmeldenummer: 12745671.3
(22) Anmeldetag: 02.08.2012
(51) Int. Cl.: B60L 3/00, B60L 11/18, H02J 7/14

(54) **STEUERVORRICHTUNG FÜR EINEN GLEICHSPANNUNGSWANDLER EINES ELEKTRISCHEN ANTRIEBSSYSTEMS UND VERFAHREN ZUM BETREIBEN EINES GLEICHSPANNUNGSWANDLERS**
CONTROL DEVICE FOR A DC-TO-DC CONVERTER OF AN ELECTRICAL DRIVE SYSTEM, AND A METHOD FOR OPERATING A DC-TO-DC CONVERTER
DISPOSITIF DE COMMANDE D'UN CONVERTISSEUR CONTINU-CONTINU D'UN SYSTÈME DE PROPULSION ÉLECTRIQUE ET PROCÉDÉ PERMETTANT DE FAIRE FONCTIONNER UN CONVERTISSEUR CONTINU-CONTINU

(30) Priorität: 20.09.2011 DE 102011083010
(43) Veröffentlichungstag der Anmeldung: 30.07.2014
(73) Patentinhaber: Robert Bosch GmbH, 70442 Stuttgart (DE)
(72) Erfinder: RAICHLE, Daniel, 71665 Vaihingen (DE); KNORPP, Thomas, 71711 Murr (DE); RUFFER, Michael, 71640 Ludwigsburg (DE); MICHELS, Markus, 70469 Stuttgart (DE)
(86) Internationale Anmeldenummer: PCT/EP2012/065129
(87) Internationale Veröffentlichungsnummer: WO 2013/041280

(56) Entgegenhaltungen:
- EP-A1- 1 603 224
- EP-A2- 1 306 262
- DE-A1- 10 313 215
- JP-A- 2010 130 877
- US-A1- 2010 145 561

## Beschreibung

Die Erfindung betrifft eine Steuervorrichtung für einen Gleichspannungswandler und ein Verfahren zum Betreiben eines Gleichspannungswandlers, insbesondere für die Spannungsversorgung eines Bordnetzes eines Hybridfahrzeugs aus einem Hochspannungsnetz.

### Stand der Technik

Bei Hybridfahrzeugen kann die Versorgung eines Niedervoltbordnetzes durch das Hochvoltnetz, welches für die Versorgung des elektrischen Antriebs des Hybridfahrzeugs eingesetzt wird, gewährleistet werden. Dazu kann beispielsweise ein Gleichspannungswandler verwendet werden, welcher Energie aus dem Hochvoltnetz entnimmt und die Hochspannung des Hochvoltnetzes in eine entsprechenden Bordnetzspannung umgewandelt werden, siehe JP 2010 130 877 A.

Wenn die Hochspannungsquelle, beispielsweise eine Traktionsbatterie, zeitweise oder dauerhaft ausfällt, kann in einem Hybridfahrzeug der Verbrennungsmotor zur Versorgung des Hochvoltnetzes herangezogen werden. Ersatzweise kann dabei die elektrische Maschine im generatorischen Betrieb betrieben werden und die von dem Verbrennungsmotor bereitgestellte kinetische Energie in elektrische Energie umsetzen. Der der elektrischen Maschine vorgeschaltete Pulswechselrichter kann dann in einem sogenannten Spannungsregelmodus (VCM, "voltage control mode") betrieben werden, um das Hochvoltnetz ersatzweise mit Hochspannung zu versorgen.

Da die Dynamik einer elektrischen Maschine um etliche Größenordnungen größer ist als die eines Verbrennungsmotors, ist im Betrieb darauf zu achten, dass Leistungsschwankungen im Niedervoltnetz nicht ungedämpft auf das Hochvoltnetz übertragen werden, da ansonsten die Gefahr besteht, dass der Verbrennungsmotor durch starke Leistungssprünge abgewürgt werden könnte.

Die Druckschrift DE 103 13 215 A1 offenbart ein Verfahren zur Regelung einer Bordnetzspannung, die über einen Generator von einem Verbrennungsmotor erzeugt wird. Dabei wird bei Lastsprüngen im Bordnetz eine Lastantwortfunktion zur lastabhängigen Spannungsregelung eingesetzt, welche bei Lastabwürfen oder - zuschaltungen durch eine Spannungsanstiegsbegrenzung zu hohe Lastsprünge im Generator vermeidet.

### Offenbarung der Erfindung

Die vorliegende Erfindung schafft gemäß einem Aspekt eine Steuervorrichtung zum Ansteuern eines Gleichspannungswandlers, mit einer Spannungsregeleinrichtung, welche dazu ausgelegt ist, als Regelgröße die Ausgangsspannung des Gleichspannungswandlers zu regeln, und einer Stromregeleinrichtung, welche dazu ausgelegt ist, als Regelgröße den Ausgangsstrom des Gleichspannungswandlers zu regeln. Dabei ist die Steuervorrichtung dazu ausgelegt, ein Betriebswahlsignal zu empfangen, und in Abhängigkeit von dem Betriebswahlsignal die Spannungsregeleinrichtung derart einzustellen, dass die Spannungsregeleinrichtung die Ausgangsspannung des Gleichspannungswandlers auf eine vorbestimmte konstante Maximalspannung begrenzt, und die Stromregeleinrichtung derart einzustellen, dass die Stromregeleinrichtung als Regelabweichung die Differenz zwischen einer vorbestimmten Sollausgangsspannung und der Ausgangsspannung des Gleichspannungswandlers verwendet.

Gemäß einem weiteren Aspekt schafft die vorliegende Erfindung ein elektrisches Antriebssystem, insbesondere für ein Hybridfahrzeug, mit einem Hochspannungszwischenkreis, welcher durch eine Hochspannungsquelle gespeist wird, einem Pulswechselrichter, welcher mit dem Hochspannungszwischenkreis gekoppelt ist, einer elektrischen Maschine, welche mit dem Pulswechselrichter gekoppelt ist, einem Gleichspannungswandler, welcher mit dem Pulswechselrichter und dem Hochspannungszwischenkreis gekoppelt ist, und welcher dazu ausgelegt ist, eine Hochspannung aus dem Hochspannungszwischenkreis in eine Niederspannung für ein Bordnetz zu wandeln, einer Niedervoltbatterie, welche mit dem Gleichspannungswandler gekoppelt ist, einer Vielzahl von selektiv zuschaltbaren elektrischen Bordnetzverbrauchern, welche mit der Niedervoltbatterie und dem Gleichspannungswandler gekoppelt sind, und einer erfindungsgemäßen Steuervorrichtung, welche dazu ausgelegt ist, den Gleichspannungswandler, zum Versorgen der Niedervoltbatterie und der Vielzahl der Bordnetzverbraucher mit einer Niedervoltspannung aus dem Hochspannungszwischenkreis, anzusteuern.

Gemäß einem weiteren Aspekt schafft die vorliegende Erfindung ein Verfahren zum Betreiben eines Gleichspannungswandlers, mit den Schritten des Ermittelns, ob die Eingangsspannung des Gleichspannungswandlers durch eine elektrische Maschine im generatorischen Betrieb bereitgestellt wird, des Ausgebens eines entsprechenden Betriebswahlsignals, und des Betreibens, in Abhängigkeit von dem Betriebswahlsignal, des Gleichspannungswandlers in Stromregelung. Das Betreiben des Gleichspannungswandlers weist dabei die Schritte des Begrenzens der Ausgangsspannung des Gleichspannungswandlers auf eine vorbestimmte konstante Maximalspannung, und des Regelns des Ausgangsstroms des Gleichspannungswandlers auf eine Regelabweichung, welche durch die Differenz zwischen einer vorbestimmten Sollausgangsspannung des Gleichspannungswandlers und der Ausgangsspannung des Gleichspannungswandlers gebildet wird.

### Vorteile der Erfindung

Eine Idee der vorliegenden Erfindung ist es, den zwischen einem Hochvoltnetz und einem Niedervoltnetz geschalteten Gleichspannungswandler in einem intelligenten Regelmodus zu betreiben, so dass Leistungsschwankungen im Niedervoltnetz erst mit entsprechend einstellbarer Verzögerung, das heißt gedämpft in das Hochvoltnetz weitergegeben werden. Dies ist besonders vorteilhaft, wenn die Hochspannung des Hochvoltnetzes durch eine elektrische Maschine und einen Pulswechselrichter im Spannungsregelmodus bereitgestellt wird.

Eine weitere Idee der vorliegenden Erfindung ist es, vorhandene elektrische Komponenten des Bordnetzes und des Gleichspannungswandlers zu nutzen, um eine Dämpfung der Leistungsschwankungen im Bordnetz gegenüber dem Hochvoltnetz zu erreichen. Dadurch kann das elektrische Antriebssystem ohne den Einbau zusätzlicher Komponenten ausgelegt werden.

Gemäß einer Ausführungsform kann das elektrisches Antriebssystem weiterhin eine Wechselrichtersteuervorrichtung umfassen, welche dazu ausgelegt ist, den Pulswechselrichter in einem Spannungsregelmodus zum Versorgen des Hochspannungszwischenkreises durch die elektrische Maschine anzusteuern, wenn die Hochspannungsquelle ausgefallen ist. Dies bietet den Vorteil, dass in einem Hybridfahrzeug eine ersatzweise bzw. temporäre Aufrechterhaltung der Hochspannung in dem Hochvoltnetz möglich bleibt.

Vorteilhafterweise kann die Wechselrichtersteuervorrichtung dann dazu ausgelegt werden, ein Betriebswahlsignal an die Steuervorrichtung auszugeben, welches anzeigt, dass die Wechselrichtersteuervorrichtung den Pulswechselrichter in einem Spannungsregelmodus ansteuert. Dadurch kann in vorteilhafter Weise der Stromregelbetrieb des Gleichspannungswandlers mit einem Spannungsregelmodus des Pulswechselrichters korreliert werden, um starke Leistungsschwankungen im Hochvoltnetz zu unterdrücken, solange der Verbrennungsmotor des Hybridfahrzeugs für die Bereitstellung der Hochspannung im Hochvoltnetz sorgt. Damit können Leistungssprünge auf Seiten des Bordnetzes im Hochvoltnetz vermieden werden, wodurch der Verbrennungsmotor zuverlässiger laufen kann.

Gemäß einer Ausführungsform kann die Maximalspannung größer als die Sollausgangsspannung sein. Durch einen vorbestimmten Abstand zwischen Sollausgangsspannung und Maximalspannung kann eine ausreichende Dämpfungsreserve in der Niedervoltbatterie gewährleistet bleiben, sowohl bei einem Zuschalten als auch bei einem Abschalten von Bordnetzverbrauchern.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines elektrischen Antriebssystems eines Hybridfahrzeugs gemäß einer Ausführungsform der Erfindung;
- Fig. 2: eine schematische Darstellung eines Spannungsreglers einer Steuervorrichtung für einen Gleichspannungswandler;
- Fig. 3: eine schematische Darstellung eines Stromreglers einer Steuervorrichtung für einen Gleichspannungswandler;
- Fig. 4: eine schematische Darstellung von beispielhaften Zeitverläufen elektrischer Betriebsgrößen in einem Antriebssystem gemäß der Erfindung;
- Fig. 5: eine schematische Darstellung von beispielhaften Zeitverläufen elektrischer Betriebsgrößen in einem Antriebssystem gemäß der Erfindung; und
- Fig. 6: eine schematische Darstellung eines Verfahrens zum Betreiben eines Gleichspannungswandlers gemäß einer weiteren Ausführungsform der Erfindung.

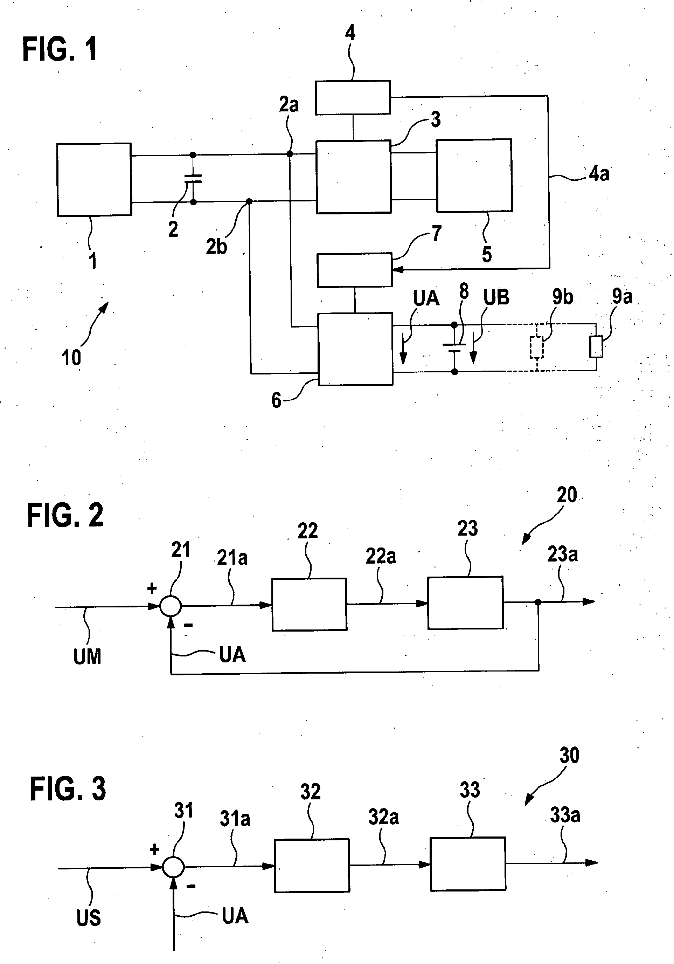

Fig. 1 zeigt eine schematische Darstellung eines elektrischen Antriebssystems 10, beispielsweise eines Hybridfahrzeugs. Das elektrische Antriebssystem 10 kann eine Hochspannungsquelle 1 umfassen, beispielsweise eine Traktionsbatterie oder eine andere Energiespeichereinrichtung eines Hybridfahrzeugs. Die Hochspannungsquelle 1 speist dabei einen Hochspannungszwischenkreis 2, welcher beispielsweise einen Zwischenkreiskondensator umfassen kann. Der Hochspannungszwischenkreis 2 ist über Knoten 2a und 2b einerseits mit Eingangsanschlüssen eines Pulswechselrichters 3 gekoppelt und andererseits mit Eingangsanschlüssen eines Gleichspannungswandlers 6.

Der Pulswechselrichter 3 ist mit Ausgangsanschlüssen an eine elektrische Maschine 5 gekoppelt und ist dazu ausgelegt, von der Hochspannungsquelle 1 bereitgestellte elektrische Energie zur Versorgung der elektrischen Maschine 5 zum Antreiben des Hybridfahrzeugs zu wandeln. Dabei kann eine Wechselrichtersteuervorrichtung 4 vorgesehen sein, welche dazu ausgelegt ist, den Pulswechselrichter 3 zum Versorgen der elektrischen Maschine 5 mit elektrischer Energie anzusteuern.

Der Gleichspannungswandler 6 kann dazu ausgelegt sein, die von dem Hochspannungszwischenkreis 2 bereitgestellte Hochspannung aus dem Hochvoltnetz in eine Niedervoltspannung, beispielsweise für ein Bordnetz des Hybridfahrzeugs zu wandeln. Dabei kann der Gleichspannungswandler 6 eine Eingangsspannung UE, welche der an dem Hochspannungszwischenkreis 2 anliegenden Hochspannung entsprechen kann, in eine Ausgangsspannung UA wandeln. Die Eingangsspannung UE kann dabei beispielsweise mehrere hundert Volt betragen, während die Ausgangsspannung UA beispielsweise zwischen 5 und 20 Volt betragen kann. Die Ausgangsspannung UA kann dabei zur Versorgung einer Niedervoltbatterie bzw. Bordnetzbatterie 8 dienen, an der die Batteriespannung UB abfallen kann. Weiterhin können an das Bordnetz eine Vielzahl von Bordnetzverbrauchern 9a, 9b angeschlossen sein, welche selektiv an die Ausgangsanschlüsse des Gleichspannungswandlers 6 zu- oder abschaltbar sein können. Beispielhaft sind in Fig. 1 nur zwei Bordnetzverbraucher 9a, 9b gezeigt, wobei jedoch jede andere Anzahl von Bordnetzverbrauchern gleichfalls möglich ist. Bordnetzverbraucher können beispielsweise eine Klimaanlage, einen Zigarettenanzünder, einen Bordcomputer, ein Hifi-System oder ähnliche elektrische Komponenten eines Fahrzeugs umfassen.

Falls die Hochspannungsquelle 1 defekt ist oder ausfällt, das heißt, der Hochspannungszwischenkreis 2 nicht mehr aus der Hochspannungsquelle 1 versorgt werden kann, kann das elektrische Antriebssystem 10 dazu ausgelegt sein, das Hochvoltnetz mittels kinetischer Energie des (nicht gezeigten) Verbrennungsmotors des Hybridfahrzeugs zu speisen. Dabei kann die elektrische Maschine 5 im generatorischen Betrieb betrieben werden, und von dem Verbrennungsmotor bereitgestellte kinetische Energie in elektrische Energie umwandeln. Der Pulswechselrichter 3 kann in diesem Fall so angesteuert werden, dass die elektrische Maschine 5 das Hochvoltnetz bzw. den Hochspannungszwischenkreis 2 mit Hochspannung speist. Dazu kann die Wechselrichtersteuervorrichtung 4 dazu ausgelegt sein, den Pulswechselrichter 3 in einem Spannungsregelmodus zu betreiben.

Wenn die Wechselrichtersteuervorrichtung 4 den Pulswechselrichter 3 im Spannungsregelmodus betreibt, kann die Wechselrichtersteuervorrichtung 4 ein Betriebswahlsignal 4a ausgeben, welches an eine Steuervorrichtung 7 des Gleichspannungswandlers 6 abgegeben wird. Die Steuervorrichtung 7 des Gleichspannungswandlers 6 ist dazu ausgelegt, den Gleichspannungswandler 6 zum Wandeln der Hochspannung aus dem Hochspannungszwischenkreis 2 in die Bordnetzspannung UA anzusteuern. Wenn die Steuervorrichtung 7 das Betriebswahlsignal 4a empfängt, kann die Steuervorrichtung 7 von dem gewöhnlichen Normalbetrieb des Gleichspannungswandlers 6 in einen Stromregelbetrieb des Gleichspannungswandlers 6 umschalten, das heißt, statt der Ausgangsspannung UA des Gleichspannungswandlers 6 wird im Stromregelbetrieb der Ausgangsstrom IA des Gleichspannungswandlers 6 geregelt.

In den Fig. 2 und 3 sind schematische Darstellungen einer Spannungsregeleinrichtung 20 sowie einer Stromregeleinrichtung 30 der Steuervorrichtung 7 aus Fig. 1 gezeigt. Die Spannungsregeleinrichtung 20 weist ein Subtrahierglied 21 auf, welches mit einer Führungsgröße gespeist wird. Im Normalbetrieb kann die Führungsgröße die Sollspannung des Gleichspannungswandlers 6 sein. Weiterhin wird an den subtrahierenden Eingang des Subtrahierglieds 21 die Regelgröße 23a der Spannungsregeleinrichtung 20 in einer Rückkoppelschleife zurückgespeist. Im Normalbetrieb kann die Rückkoppelgröße die Istspannung, das heißt die Ausgangsspannung des Gleichspannungswandlers 6 sein. Das Subtrahierglied 21 gibt eine Regelabweichung 21a aus, mit welcher ein Regler 22 gespeist wird, der in Abhängigkeit von der Regelabweichung 21a eine Stellgröße 22a erzeugt, mit welcher die Regelstrecke 23 gespeist wird. Die Regelstrecke 23 kann dabei Störgrößen unterworfen sein und gibt als Regelgröße die Größe 23a aus, welche beispielsweise die Ausgangsspannung bzw. Istspannung des Gleichspannungswandlers 6 sein kann.

Fig. 2 zeigt die Spannungsregeleinrichtung 20 im Spannungsregelbetrieb. In diesem Fall wird als Führungsgröße eine vorbestimmte konstante Maximalspannung UM eingespeist, welche den Maximalwert der Ausgangsspannung UA des Gleichspannungswandlers 6 kennzeichnet. Der Maximalwert UM kann beispielsweise 15 Volt betragen. Die Spannungsregeleinrichtung 20 wird in diesem Fall als Begrenzereinrichtung für die Ausgangsspannung UA des Gleichspannungswandlers 6 betrieben, das heißt, die Spannungsregeleinrichtung 20 stellt sicher, dass die Ausgangsspannung UA des Gleichspannungswandlers 6 nie die vorbestimmte konstante Maximalspannung UM überschreitet.

Stattdessen wird der Gleichspannungswandler 6 über die in Fig. 3 gezeigte Stromregeleinrichtung 30 im Stromregelbetrieb betrieben. Die Stromregeleinrichtung 30 weist ein Subtrahierglied 31 auf, welches mit einer Führungsgröße gespeist wird. Im Stromregelbetrieb kann die Führungsgröße die Sollausgangsspannung US des Gleichspannungswandlers 6 sein. Weiterhin wird an den subtrahierenden Eingang des Subtrahierglieds 31 die Istspannung bzw. Ausgangsspannung UA des Gleichspannungswandlers 6 eingespeist. Das Subtrahierglied 31 gibt als Regelabweichung 31a daher eine Differenz aus der Sollausgangsspannung US des Gleichspannungswandlers 6 und der Ausgangsspannung UA des Gleichspannungswandlers 6 aus, mit welcher ein Regler 32 gespeist wird, der in Abhängigkeit von der Regelabweichung 31 a eine Stellgröße 32a erzeugt, mit welcher die Regelstrecke 33 gespeist wird. Die Regelstrecke 33 kann dabei Störgrößen unterworfen sein und gibt als Regelgröße die Größe 33a aus, welche beispielsweise der Ausgangsstrom IA des Gleichspannungswandlers 6 sein kann.

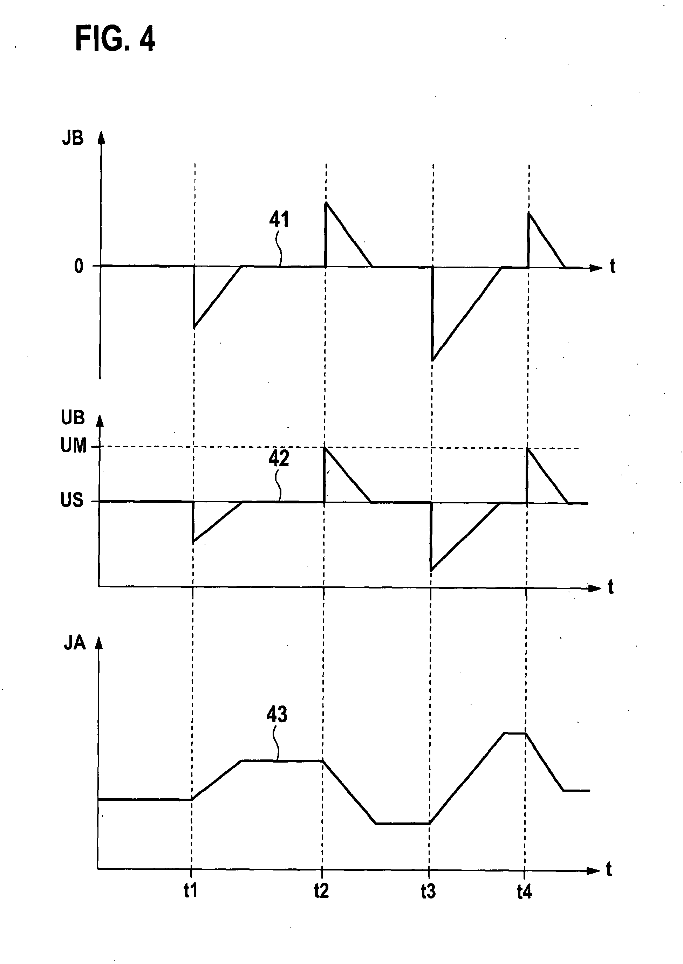

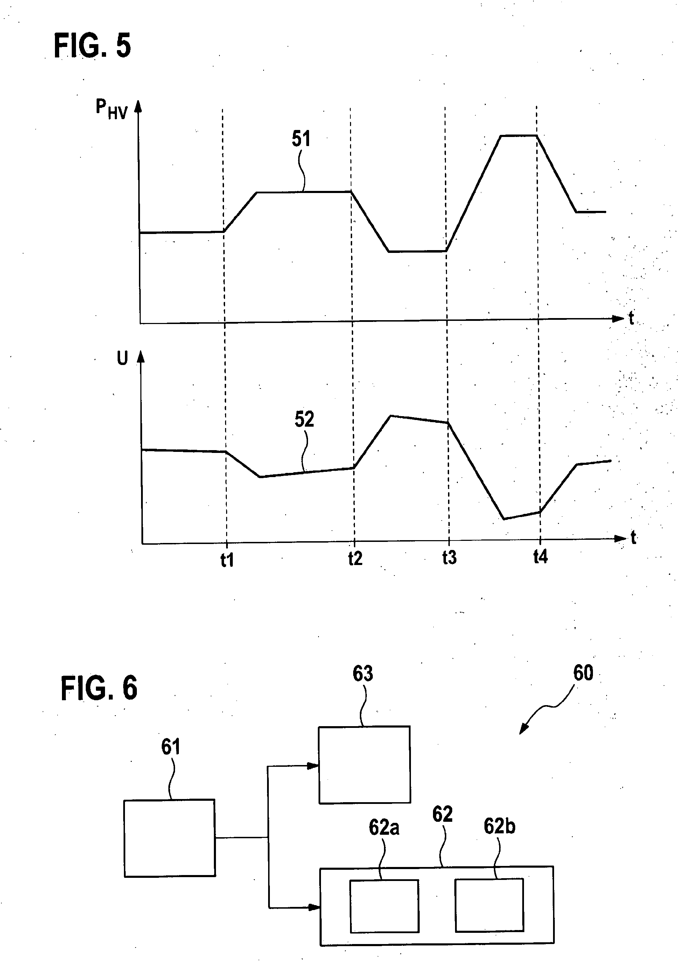

Mit der Steuervorrichtung 7 in Fig. 1, welche eine Spannungsregeleinrichtung 20 nach Fig. 2 und eine Stromregeleinrichtung 30 nach Fig. 3 aufweisen kann, kann der Gleichspannungswandler 6 im Stromregelbetrieb betrieben werden, da die Ausgangsspannung UA des Gleichspannungswandlers 6 nur über die Stromregeleinrichtung 30 geregelt wird. Dadurch kann man ein Verhalten des elektrischen Antriebssystems 10 erreichen, welches mit Bezug auf die beispielhaften Zeitverläufe der elektrischen Betriebsgrößen des elektrischen Antriebssystems 10 in den Fig. 4 und 5 im Folgenden detailliert erläutert wird.

Der Gleichspannungswandler 6 kann im Stromregelbetrieb aus Sicht des Hochvoltnetzes einen Verbraucher mit annähernd konstanter Last emulieren. Dadurch wird es der Wechselrichtersteuervorrichtung 4 des Pulswechselrichters 3 ermöglicht, sich auf eine relativ konstante Last im Hochvoltnetz zu stützen. Hohe Lastsprünge und Momentenschwankungen in der elektrischen Maschine 5, welche zu Problemen beim Betrieb des Verbrennungsmotors führen könnten, können dadurch effektiv vermieden werden.

Durch die Anhebung der Ausgangsspannung UA des Gleichspannungswandlers 6 auf einen vorbestimmten konstanten Maximalwert UM kann erreicht werden, dass die Niedervoltbatterie 8 immer geladen wird und dadurch als dynamischer zusätzlicher Bordnetzverbraucher wirkt. Die Zeitverläufe 41 und 42 zeigen beispielhafte Verläufe für den Strom IB bzw. die Spannung UB in der Niedervoltbatterie 8. Zunächst befindet sich das Bordnetz im Regelungsgleichgewicht und die Stromregeleinrichtung 30 regelt den Ausgangsstrom IA des Gleichspannungswandlers 6 derart, dass die Spannung UB der Niedervoltbatterie annähernd konstant auf der Sollausgangsspannung US gehalten wird. Die Sollausgangsspannung US kann beispielsweise ein vorbestimmter Wert sein, welcher geringer als die Maximalspannung UM ist, beispielsweise ein Wert zwischen 10 und 13 Volt. Damit kann sichergestellt werden, dass es zu keiner permanenten Überladung der Niedervoltbatterie 8 und damit zum Beispiel zu einer Brandgefahr kommt. Der Abstand der Sollausgangsspannung US zu der Maximalspannung UM kann entsprechend eingestellt werden, um die Niedervoltbatterie 8 als dynamischen Bordnetzverbraucher mit entsprechend hoher Dämpfungsreserve nutzen zu können.

Zu einem ersten Zeitpunkt t1 kann beispielsweise ein Verbraucher im Bordnetz zugeschaltet werden, das heißt, die Spannung UB an der Niedervoltbatterie 8 bricht schlagartig ein. Anstatt nun die Ausgangsspannung UA des Gleichspannungswandlers 6 ebenso schlagartig zu erhöhen, was zu starken Leistungsschwankungen im Hochvoltnetz führen würde, übernimmt die Niedervoltbatterie 8 für einen gewissen Zeitraum nach dem ersten Zeitpunkt t1 die Energieversorgung des zugeschalteten Verbrauchers.

Der Zeitverlauf 42 zeigt demnach den Einbruch der Batteriespannung UB zum ersten Zeitpunkt t1. Zeitgleich zeigt der Zeitverlauf 41 einen negativen Strom IB durch die Niedervoltbatterie 8, das heißt, die Niedervoltbatterie 8 wird teilweise entladen. Der Zeitverlauf 43 zeigt die Stromregelung der Stromregeleinrichtung 30, welche den Ausgangsstrom IA langsam nach oben regelt. Dadurch steigt die Leistungsentnahme aus dem Hochvoltnetz, die in Fig. 5 schematisch in dem Zeitverlauf 51 dargestellt ist, im gleichen Maße an, wie der Ausgangsstrom IA des Gleichspannungswandlers 6 nach oben geregelt wird. Der Zeitverlauf 52 in Fig. 5 zeigt den Ladungszustand der Niedervoltbatterie 8, der ab dem ersten Zeitpunkt t1 absinkt, solange die Niedervoltbatterie 8 den zugeschalteten Bordnetzverbraucher mit Energie versorgt.

Nachdem die Spannung UB an der Niedervoltbatterie 8 wieder den Sollausgangsspannungswert US erreicht hat, befindet sich das Bordnetz wieder im Regelgleichgewicht. Zu einem zweiten Zeitpunkt t2 wird nun ein Bordnetzverbraucher abgeschaltet. Dadurch steigt die Spannung UB der Niedervoltbatterie 8 an, überschreitet jedoch aufgrund der begrenzenden Funktion der Spannungsregeleinrichtung 20 den vorbestimmten konstanten Maximalwert UM nicht. Die Niedervoltbatterie 8 übernimmt damit die Last des nunmehr abgeschalteten Bordnetzverbrauchers und wird, wie im Zeitverlauf 52 gezeigt, wieder teilweise aufgeladen. Die zeigt sich in einem positiven Strom IB durch die Niedervoltbatterie 8, wie im Zeitverlauf 41 gezeigt.

Die Stromregeleinrichtung 30 regelt den Ausgangsstrom IA wie im Zeitverlauf 43 beispielhaft gezeigt wieder solange herunter, bis die Spannung UB der Niedervoltbatterie 8 wieder den Sollausgangsspannungswert US erreicht hat. Im gleichen Maße sinkt der Leistungsbedarf 51 aus dem Hochvoltnetz.

Zu dritten und vierten Zeitpunkten t3 bzw. t4 werden wieder Bordnetzverbraucher zu- bzw. abgeschaltet, und die Stromregeleinrichtung 30 regelt den Ausgangsstrom IA des Gleichspannungswandlers 6 wie vorstehend mit Bezug auf die ersten und zweiten Zeitpunkte t1 bzw. t2 erläutert.

Damit ein schonender Einstieg in den Stromregelmodus ermöglicht wird, kann der Gleichspannungswandler 6 für eine vorbestimmte Zeitspanne nach dem Empfang des Betriebswahlsignals 4a durch die Wechselrichtersteuervorrichtung 7 mit einer für den Start optimierten Stromgrenze im Stromregelbetrieb betrieben werden. Die Stromgrenze kann beispielsweise etwa 20 Ampere betragen und insbesondere geringer als der Mindeststrom im Fahrzeug sein. Dadurch ist sichergestellt, dass der angeforderte Strom stets verfügbar ist und die Wechselrichtersteuervorrichtung 7 genügend Zeit hat, um die Regelung des Pulswechselrichters 3 an die Lastanforderungen des Bordnetzes anzupassen.

Fig. 6 zeigt eine schematische Darstellung eines Verfahrens 60 zum Betreiben eines Gleichspannungswandlers, insbesondere eines Gleichspannungswandlers 6 in einem elektrischen Antriebssystem 10 eines Hybridfahrzeugs wie in Fig. 1 exemplarisch gezeigt. In einem ersten Schritt 61 erfolgt ein Ermitteln, ob die Eingangsspannung des Gleichspannungswandlers durch eine elektrische Maschine im generatorischen Betrieb bereitgestellt wird. Wenn dies der Fall ist, kann ein entsprechendes Betriebswahlsignal ausgegeben werden, beispielsweise durch eine Steuervorrichtung eines der elektrischen Maschine zugeordneten Pulswechselrichters. Falls das Hochvoltnetz, an das der Gleichspannungswandler angeschlossen sein kann, regulär aus der Hochspannungsquelle gespeist wird, kann in einem Schritt 63 ein gewöhnlicher Spannungsregelbetrieb des Gleichspannungswandlers erfolgen.

Falls jedoch das Betriebswahlsignal aktiviert worden ist, und die elektrische Maschine in Kombination mit dem Pulswechselrichter die Versorgung des Hochvoltnetzes mit einer Hochspannung übernommen hat, kann in einem Schritt 62 der Betrieb des Gleichspannungswandlers in Stromregelung aufgenommen werden. Dazu kann, wie oben erläutert zunächst eine für den Start optimierten Stromgrenze für den Strom in einer Stromregeleinrichtung des Gleichspannungswandlers aktiviert werden, um ein sanftes Anlaufen des Stromregelbetriebs zu ermöglichen.

Nach dem anfänglichen Starten des Stromregelbetriebs kann das Betreiben des Gleichspannungswandlers die Schritte 62a und 62b des Begrenzens der Ausgangsspannung des Gleichspannungswandlers auf eine vorbestimmte konstante Maximalspannung bzw. des Regelns des Ausgangsstroms des Gleichspannungswandlers auf eine Regelabweichung beinhalten, wobei die Regelabweichung durch die Differenz zwischen einer vorbestimmten Sollausgangsspannung des Gleichspannungswandlers und der Ausgangsspannung des Gleichspannungswandlers gebildet wird.

## Patentansprüche

1. Steuervorrichtung (7) zum Ansteuern eines Gleichspannungswandlers (6), mit:
einer Spannungsregeleinrichtung (20), welche dazu ausgelegt ist, als Regelgröße die Ausgangsspannung (UA) des Gleichspannungswandlers (6) zu regeln; und einer Stromregeleinrichtung (30), welche dazu ausgelegt ist, als Regelgröße den Ausgangsstrom (IA) des Gleichspannungswandlers (6) zu regeln, wobei die Steuervorrichtung (7) dazu ausgelegt ist, ein Betriebswahlsignal (4a) zu empfangen, und in Abhängigkeit von dem Betriebswahlsignal (4a) die Spannungsregeleinrichtung (20) derart einzustellen, dass die Spannungsregeleinrichtung (20) die Ausgangsspannung (UA) des Gleichspannungswandlers (6) auf eine vorbestimmte konstante Maximalspannung (UM) begrenzt, und die Stromregeleinrichtung (30) derart einzustellen, dass die Stromregeleinrichtung (30) als Regelabweichung die Differenz zwischen einer vorbestimmten Sollausgangsspannung (US) und der Ausgangsspannung (UA) des Gleichspannungswandlers (6) verwendet.

2. Steuervorrichtung (7) nach Anspruch 1, wobei die Maximalspannung (UM) größer als die Sollausgangsspannung (US) ist.

3. Steuervorrichtung (7) nach einem der Ansprüche 1 und 2, wobei das Betriebswahlsignal (4a) anzeigt, ob die Eingangsspannung (UE) des Gleichspannungswandlers (6) durch eine elektrische Maschine (5) bereitgestellt wird, und wobei die Steuervorrichtung (7) dazu ausgelegt ist, den Gleichspannungswandler (6) stromgeregelt zu betreiben, wenn die Eingangsspannung (UE) des Gleichspannungswandlers (6) durch eine elektrische Maschine (5) bereitgestellt wird.

4. Elektrisches Antriebssystem (10), mit:
einem Hochspannungszwischenkreis (2), welcher durch eine Hochspannungsquelle (1) gespeist wird;
einem Pulswechselrichter (3), welcher mit dem Hochspannungszwischenkreis (2) gekoppelt ist;
einer elektrischen Maschine (5), welche mit dem Pulswechselrichter (3) gekoppelt ist;
einem Gleichspannungswandler (6), welcher mit dem Pulswechselrichter (3) und dem Hochspannungszwischenkreis (2) gekoppelt ist, und welcher dazu ausgelegt ist, eine Hochspannung (UE) aus dem Hochspannungszwischenkreis (2) in eine Niederspannung (UA) für ein Bordnetz zu wandeln;
einer Niedervoltbatterie (8), welche mit dem Gleichspannungswandler (6) gekoppelt ist;
einer Vielzahl von selektiv zuschaltbaren elektrischen Bordnetzverbrauchern (9a, 9b),
welche mit der Niedervoltbatterie (8) und dem Gleichspannungswandler (6) gekoppelt sind; und
einer Steuervorrichtung (7) nach einem der Ansprüche 1 bis 3, welche dazu ausgelegt ist, den Gleichspannungswandler (6), zum Versorgen der Niedervoltbatterie (8) und der Vielzahl der Bordnetzverbraucher (9a, 9b) mit einer Niedervoltspannung (UA) aus dem Hochspannungszwischenkreis (2), anzusteuern.

5. Elektrisches Antriebssystem (10) nach Anspruch 4, wobei die Steuervorrichtung (7) dazu ausgelegt ist, die Stromregeleinrichtung (30) derart einzustellen, dass als Regelabweichung die Differenz zwischen einer vorbestimmten Sollausgangsspannung (US) und der Ausgangsspannung (UA) des Gleichspannungswandlers (6) verwendet wird, wenn die elektrische Maschine (5) im generatorischen Betrieb betrieben wird und der Hochspannungszwischenkreis (2) durch den Pulswechselrichter (3) und die elektrische Maschine (5) gespeist wird.

6. Elektrisches Antriebssystem (10) nach einem der Ansprüche 4 und 5, weiterhin mit:
einer Wechselrichtersteuervorrichtung (4), welche dazu ausgelegt ist, den Pulswechselrichter (3) in einem Spannungsregelmodus zum Versorgen des Hochspannungszwischenkreises (2) durch die elektrische Maschine (5) anzusteuern,
wenn die Hochspannungsquelle (1) ausgefallen ist.

7. Elektrisches Antriebssystem (10) nach Anspruch 6, wobei die Wechselrichtersteuervorrichtung (4) dazu ausgelegt ist, ein Betriebswahlsignal (4a) an die Steuervorrichtung (7) auszugeben, welches anzeigt, dass die Wechselrichtersteuervorrichtung (4) den Pulswechselrichter (3) in einem Spannungsregelmodus ansteuert.

8. Verfahren (60) zum Betreiben eines Gleichspannungswandlers (6), mit den Schritten:
Ermitteln (61), ob die Eingangsspannung (UE) des Gleichspannungswandlers (6) durch eine elektrische Maschine (5) im generatorischen Betrieb bereitgestellt wird, und
Ausgeben eines entsprechenden Betriebswahlsignals (4a);
Betreiben (62), in Abhängigkeit von dem Betriebswahlsignal (4a), des Gleichspannungswandlers (6) in Stromregelung, wobei das Betreiben des Gleichspannungswandlers (6) aufweist:
Begrenzen (62a) der Ausgangsspannung (UA) des G.leichspannungswandlers (6) auf eine vorbestimmte konstante Maximalspannung (UM); und
Regeln (62b) des Ausgangsstroms des Gleichspannungswandlers (6) auf eine Regelabweichung, welche durch die Differenz zwischen einer vorbestimmten Sollausgangsspannung (US) des Gleichspannungswandlers (6) und der Ausgangsspannung (UA) des Gleichspannungswandlers (6) gebildet wird.

9. Verfahren (60) nach Anspruch 8, wobei die Maximalspannung (UM) größer als die Sollausgangsspannung (US) ist.

## Claims

1. Control device (7) for actuating a DC-to-DC converter (6), having:
a voltage regulating device (20) which is configured to regulate as regulated variable the output voltage (UA) of the DC-to-DC voltage converter (6); and a current regulating device (30) which is configured to regulate as regulated variable the output current (IA) of the DC-to-DC voltage converter (6), wherein the control device (7) is configured to receive a mode selection signal (4a) and, on the basis of the mode selection signal (4a), to set the voltage regulating device (20) such that the voltage regulating device (20) limits the output voltage (UA) of the DC-to-DC voltage converter (6) to a predefined constant maximum voltage (UM), and to set the current regulating device (30) such that the current regulating device (30) uses as regulating deviation the difference between a predefined setpoint output voltage (US) and the output voltage (UA) of the DC-to-DC voltage converter (6).

2. Control device (7) according to Claim 1, wherein the maximum voltage (UM) is greater than the setpoint output voltage (US).

3. Control device (7) according to either of Claims 1 and 2, wherein the mode selection signal (4a) indicates whether the input voltage (UE) of the DC-to-DC voltage converter (6) is provided by an electric machine (5) and wherein the control device (7) is configured to operate the DC-to-DC voltage converter (6) in a current-regulated manner if the input voltage (UE) of the DC-to-DC voltage converter (6) is provided by an electric machine (5).

4. Electrical drive system (10), having:
a high-voltage intermediate circuit (2) which is fed by a high-voltage source (1);
a pulse-controlled inverter (3) which is coupled to the high-voltage intermediate circuit (2);
an electric machine (5) which is coupled to the pulse-controlled inverter (3);
a DC-to-DC voltage converter (6) which is coupled to the pulse-controlled inverter (3) and to the high-voltage intermediate circuit (2) and which is configured to convert a high voltage (UE) from the high-voltage intermediate circuit (2) into a low voltage (UA) for an on-board power supply system;
a low-voltage battery (8) which is coupled to the DC-to-DC voltage converter (6);
a multiplicity of selectively connectable on-board power supply system electrical consumers (9a, 9b) which are coupled to the low-voltage battery (8) and to the DC-to-DC voltage converter (6); and
a control device (7) according to any of Claims 1 to 3, which control device is configured to actuate the DC-to-DC voltage converter (6) to supply the low-voltage battery (8) and the multiplicity of on-board power supply system consumers (9a, 9b) with a low voltage (UA) from the high-voltage intermediate circuit (2).

5. Electrical drive system (10) according to Claim 4, wherein the control device (7) is configured to set the current regulating device (30) such that the difference between a predefined setpoint output voltage (US) and the output voltage (UA) of the DC-to-DC voltage converter (6) is used as regulating deviation if the electric machine (5) is operated in generator mode and the high-voltage intermediate circuit (2) is fed by the pulse-controlled inverter (3) and the electric machine (5).

6. Electrical drive system (10) according to either of Claims 4 and 5, also having:
an inverter control device (4) which is configured to actuate the pulse-controlled inverter (3) in a voltage regulating mode for the supply of the high-voltage intermediate circuit (2) by the electric machine (5) if the high-voltage source (1) has failed.

7. Electrical drive system (10) according to Claim 6, wherein the inverter control device (4) is configured to output a mode selection signal (4a) to the control device (7), said mode selection signal indicating that the inverter control device (4) is actuating the pulse-controlled inverter (3) in a voltage regulating mode.

8. Method (60) for operating a DC-to-DC voltage converter (6), having the steps of:
determining (61) whether the input voltage (UE) of the DC-to-DC voltage converter (6) is being provided by an electric machine (5) in generator mode, and outputting a corresponding mode selection signal (4a);
operating (62) the DC-to-DC voltage converter (6), on the basis of the mode selection signal (4a), in current regulating mode, wherein operating the DC-to-DC voltage converter (6) includes:
limiting (62a) the output voltage (UA) of the DC-to-DC voltage converter (6) to a predefined constant maximum voltage (UM); and
regulating (62b) the output current of the DC-to-DC voltage converter (6) to a regulating deviation which is formed by the difference between a predefined setpoint output voltage (US) of the DC-to-DC voltage converter (6) and the output voltage (UA) of the DC-to-DC voltage converter (6).

9. Method (60) according to Claim 8, wherein the maximum voltage (UM) is greater than the setpoint output voltage (US).

## Revendications

1. Ensemble de commande (7) qui commande un convertisseur (6) de tension continue, l'ensemble présentant :
un dispositif (20) de régulation de tension conçu pour réguler comme grandeur de réglage la tension de sortie (UA) du convertisseur (6) de tension continue et
un dispositif (30) de régulation de courant conçu pour réguler comme grandeur de réglage le courant de sortie (IA) du convertisseur (6) de tension continue,
l'ensemble de commande (7) étant conçu pour recevoir un signal (4a) de sélection de mode et, pour régler le dispositif (20) de régulation de tension en fonction du signal (4a) de sélection de mode de telle sorte que le dispositif (20) de régulation de tension limite la tension de sortie (UA) du convertisseur (6) de tension continue à une tension maximale (UM) constante et prédéterminée et pour régler le dispositif (30) de régulation de courant de telle sorte que le dispositif (30) de régulation de courant utilise comme écart de réglage la différence entre une tension prédéterminée de sortie de consigne (US) et la tension de sortie (UA) du convertisseur (6) de tension continue.

2. Ensemble de commande (7) selon la revendication 1, dans lequel la tension maximale (UM) est supérieure à la tension de sortie de consigne (US).

3. Ensemble de commande (7) selon l'une des revendications 1 et 2, dans lequel le signal (4a) de sélection de mode indique si la tension d'entrée (UE) du convertisseur (6) de tension continue est délivrée par une machine électrique (5), l'ensemble de commande (7) étant conçu pour conduire le convertisseur (6) de tension continue en régulation de courant lorsque la tension d'entrée (UE) du convertisseur (6) de tension continue est délivrée par une machine électrique (5).

4. Système (10) d'entraînement électrique présentant
un circuit intermédiaire (2) à haute tension alimenté par une source (1) de haute tension,
un onduleur pulsé (3) raccordé au circuit intermédiaire (2) à haute tension,
une machine électrique (5) raccordée à l'onduleur pulsé (3),
un convertisseur (6) de tension continue raccordé à l'onduleur pulsé (3) et au circuit intermédiaire (2) à haute tension et conçu pour convertir une haute tension (UE) délivrée par le circuit intermédiaire (2) à haute tension en une basse tension (UA) destinée à un réseau de bord,
une batterie (8) à basse tension raccordée au convertisseur (6) de tension continue,
plusieurs consommateurs électriques (9a, 9b) du réseau de bord qui peuvent être raccordés sélectivement et raccordés à la batterie (8) à basse tension et au convertisseur (6) de tension continue et
un ensemble de commande (7) selon l'une des revendications 1 à 3, conçu pour commander le convertisseur (6) de tension continue de telle sorte qu'il alimente la batterie (8) à basse tension et les différents consommateurs (9a, 9b) du réseau de bord en une basse tension (UA) provenant du circuit intermédiaire (2) à haute tension.

5. Système (10) d'entraînement électrique selon la revendication 4, dans lequel l'ensemble de commande (7) est conçu pour régler le dispositif (30) de régulation de courant de telle sorte qu'il utilise comme écart de réglage la différence entre une tension de sortie de consigne (US) prédéterminée et la tension de sortie (UA) du convertisseur (6) de basse tension lorsque la machine électrique (5) est conduite en mode génératrice et que le circuit intermédiaire (2) à haute tension est alimenté par l'onduleur pulsé (3) et la machine électrique (5).

6. Système (10) d'entraînement électrique selon l'une des revendications 4 et 5, et doté en outre d'un ensemble (4) de commande d'onduleur conçu pour commander l'onduleur pulsé (3) en mode de régulation de tension pour alimenter le circuit intermédiaire (2) à haute tension par la machine électrique (5) lorsque la source (1) de haute tension a défailli.

7. Système (10) d'entraînement électrique 6, dans lequel l'ensemble (4) de commande d'onduleur est conçu pour délivrer un signal (4a) de sélection de mode à l'ensemble de commande (7) qui indique que l'ensemble (4) de commande d'onduleur commande l'onduleur pulsé (3) en un mode de régulation de tension.

8. Procédé (60) de conduite d'un convertisseur (6) de tension continue, le procédé présentant les étapes qui consistent à :
déterminer (61) si la tension d'entrée (UE) du convertisseur (6) de tension continue est délivrée par une machine électrique (5) fonctionnant en génératrice et
délivrer un signal (4a) approprié de sélection de mode,
conduire (62) en fonction du signal (4a) de sélection de mode le convertisseur (6) de tension continue en régulation de courant, la conduite du convertisseur (6) de tension continue présentant les tapes qui consistent à :
limiter (62a) la tension de sortie (UA) du convertisseur (6) de tension continue à une tension maximale constante (UM) prédéterminée et
réguler (62b) le courant de sortie du convertisseur (6) de tension continue à un écart de réglage formé par la différence entre une tension de sortie de consigne (US) prédéterminée du convertisseur (6) de tension continue et la tension de sortie (UA) du convertisseur (6) de tension continue.

9. Procédé (60) selon la revendication 8, dans lequel la tension maximale (UM) est supérieure à la tension de sortie de consigne (US).
